(19) **Europäisches Patentamt / European Patent Office / Office européen des brevets**

(11) **EP 4 224 559 B1**

(12) **EUROPEAN PATENT SPECIFICATION**

(45) Date of publication and mention of the grant of the patent:
**30.04.2025 Bulletin 2025/18**

(21) Application number: **21911612.6**

(22) Date of filing: **24.12.2021**

(51) International Patent Classification (IPC):
*H01M 4/131* (2010.01)    *H01M 4/36* (2006.01)
*H01M 4/525* (2010.01)    *H01M 4/505* (2010.01)
*H01M 4/62* (2006.01)    *H01M 10/052* (2010.01)
*H01M 10/0525* (2010.01)    *H01M 4/02* (2006.01)

(52) Cooperative Patent Classification (CPC):
**H01M 10/0525; H01M 4/131; H01M 4/364; H01M 4/525; H01M 4/625;** H01M 2004/021; Y02E 60/10

(86) International application number:
**PCT/KR2021/019830**

(87) International publication number:
**WO 2022/139547 (30.06.2022 Gazette 2022/26)**

(54) **CATHODE FOR LITHIUM SECONDARY BATTERY, AND LITHIUM SECONDARY BATTERY COMPRISING SAME**

KATHODE FÜR LITHIUMSEKUNDÄRBATTERIE UND LITHIUMSEKUNDÄRBATTERIE DAMIT

CATHODE POUR BATTERIE RECHARGEABLE AU LITHIUM ET BATTERIE RECHARGEABLE AU LITHIUM LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2020 KR 20200182745**

(43) Date of publication of application:
**09.08.2023 Bulletin 2023/32**

(60) Divisional application:
**25158757.2 / 4 546 443**

(73) Proprietor: **LG Energy Solution, Ltd.**
**Seoul 07335 (KR)**

(72) Inventors:
- **KIM, Hyeong Il**
  **Daejeon 34122 (KR)**
- **KIM, Hak Yoon**
  **Daejeon 34122 (KR)**
- **BAEK, So Ra**
  **Daejeon 34122 (KR)**
- **HUR, Hyuck**
  **Daejeon 34122 (KR)**
- **KIM, Dong Hwi**
  **Daejeon 34122 (KR)**
- **CHAE, Seul Ki**
  **Daejeon 34122 (KR)**
- **JUNG, Wang Mo**
  **Daejeon 34122 (KR)**
- **LEE, Dong Hun**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
WO-A1-2020/027204    CN-A- 106 992 318
CN-A- 111 384 372    CN-A- 111 969 200
JP-A- 2003 109 593    JP-A- 2019 220 361
KR-A- 20190 117 387    KR-A- 20200 115 362
US-A1- 2021 020 907    US-B2- 10 276 870

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

   **(Cont. next page)**

• BAN CHUNMEI ET AL: "Extremely Durable High-Rate Capability of a LiNi 0.4 Mn 0.4 Co 0.2 O 2 Cathode Enabled with Single-Walled Carbon Nanotubes", ADVANCED ENERGY MATERIALS, vol. 1, no. 1, 1 January 2011 (2011-01-01), DE, pages 58 - 62, XP093136204, ISSN: 1614-6832, DOI: 10.1002/aenm.201000001

## Description

## TECHNICAL FIELD

The present invention relates to a positive electrode for a lithium secondary battery and a lithium secondary battery including the same, and more particularly, to a positive electrode having excellent life characteristics and resistance characteristics, and a lithium secondary battery including the same.

## BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Recently, as technology in electric vehicles, etc. is developed, demand for high-capacity secondary batteries has been increasing, and accordingly, research on a high-Ni positive electrode active material having excellent capacity characteristics has been actively carried out. The high-Ni positive electrode active material is a positive electrode active material having a nickel content of 80 atm% or more and may achieve a high capacity, but there is a limitation in that as the nickel content increases, the structure stability of the positive electrode active material decreases and thus high-temperature life characteristics are reduced.

In addition, there is a limitation in that the high-Ni positive electrode active material has high resistance of the positive electrode active material itself, and has a big change in volume during charge and discharge, and thus as the charge and discharge is repeated, a conductive path is disconnected and accordingly, a resistance increase rate is increased.

To solve the above-described limitations, a method for reducing the change in volume during charge and discharge by reducing the size of crystallines of the positive electrode active material may be considered, but there is a limitation in that when the size of crystalline is reduced, the change in volume is reduced but initial resistance is increased. Particularly, in the case of the high-Ni positive electrode active material having a high nickel content, there is a limitation in that since a large amount of rocksalt phases of NiO exist on the surface of the high-Ni positive electrode active material, resistance characteristics are deteriorated in a low state of charge (SOC) and thus output characteristics are deteriorated, and when the initial resistance is increased, the above limitation becomes more serious. In particular, in order to be used as a battery for an electric vehicle, the battery should be able to produce sufficient output to enable the operation of the vehicle even in a low charging state.

Accordingly, there is a need for development on a lithium secondary battery using a high-Ni positive electrode active material to have high capacity characteristics and a low resistance increase rate, thereby producing sufficient output and to have excellent high-temperature life characteristics.

CN 106 992 318 A describes a positive electrode prepared from a paste comprising the following components by weight percent: 98.6 to 99.16% of $LiNi_{1-X-Y}Co_XAl_YO_2$, 0.02 to 0.05% of single-walled carbon nanotubes, 0.02 to 0.05% of graphene, and 0.8 to 1.3% of polyvinylidene fluoride.

KR 2019 0117387 A and US 2021/020907 A1 describe an electrode that includes an electrode active material, polyvinylidene fluoride, and a conductive agent, wherein the conductive agent includes a carbon nanotube structure in which 2 to 5,000 single-walled carbon nanotube units are bonded to each other, and the carbon nanotube structure is included in an amount of 0.01 wt % to 0.5 wt % in the electrode active material layer.

US 10 276 870 B2 describes a composite cathode active material comprising: a composite oxide capable of intercalation and deintercalation of lithium; a carbon nanostructure; and a material which is chemically inert to lithium.

Ban et al. have prepared and characterized a binder-free $LiNi0.4Mn0.4Co0.2O2$ cathode fabricated with 5 wt.% single-walled carbon nanotubes (Advanced Energy Materials, 2011, 1(1), pp. 58-62).

## DISCLOSURE OF THE INVENTION

## TECHNICAL PROBLEM

An aspect of the present invention provides a high-capacity positive electrode having improved resistance characteristics and high-temperature life characteristics, and a lithium secondary battery including the same.

## TECHNICAL SOLUTION

According to an aspect of the present invention, there is provided a positive electrode for a lithium secondary battery including a positive electrode active material layer including: a first positive electrode active material represented by Formula 1 below and having a crystalline size of 150 nm or more, wherein crystalline size is determined by X-ray diffraction analysis as set out below; a conductive agent including single-walled carbon nanotubes (SWCNTs); and a binder.

[Formula 1] $Li_{x1}[Ni_{a1}Co_{b1}M^1_{c1}M^2_{d1}]O_2$

In Formula 1 above,

$M^1$ is Mn, Al, or a combination thereof,
$M^2$ is at least one selected from the group consisting of Zr, B, W, Mg, Ce, Hf, Ta, La, Ti, Sr, Ba, F, P, and S, and
$0.9 \leq x1 \leq 1.1$, $0.8 \leq a1 < 1$, $0 < b1 < 0.2$, $0 < c1 < 0.2$, and $0 \leq d1 \leq 0.1$.

According to another aspect of the present invention, there is provided a lithium secondary battery which includes the positive electrode for a lithium secondary battery.

## ADVANTAGEOUS EFFECTS

The positive electrode according to the present invention uses a high-Ni positive electrode active material having a particular size of crystallines together with single-walled carbon nanotubes, thereby achieving high capacity characteristics and also reducing a resistance increase rate to obtain an effect of improving output characteristics. Specifically, the present invention may achieve low initial resistance and excellent capacity characteristics by using the positive electrode active material having a crystalline size of 150nm or more, and may minimize loss of a conductive path even when charging and discharging repetitively by using the single-walled carbon nanotubes. Accordingly, the lithium secondary battery to which the positive electrode according to the present invention is applied has excellent capacity characteristics, resistance characteristics, and high temperature life characteristics.

In contrast, even though single-walled carbon nanotubes are used, resistance is hardly improved when the crystalline size of the positive electrode active material is departing from the range of the present invention, and even though the positive electrode active material having the crystalline size that satisfies the range of the present invention is used, resistance improvement effects are insignificant and high-temperature life characteristics deteriorate when single-walled carbon nanotubes are not used.

## BRIEF DESCRIPTION OF THE DRAWINGS

FIG. 1 is a graph showing resistance characteristics versus SOC of lithium secondary batteries prepared according to Comparative Example 1 and Examples 1 to 3.
FIG. 2 is a graph showing resistance characteristics versus SOC of lithium secondary batteries prepared according to Comparative Examples 2 and 3.
FIG. 3 is a graph showing resistance characteristics versus SOC of lithium secondary batteries prepared according to Example 4 and Comparative Example 4.
FIG. 4 is a graph showing high-temperature life characteristics of lithium secondary batteries prepared according to Comparative Example 1 and Examples 1 to 3.
FIG. 5 is a graph showing high-temperature life characteristics of lithium secondary batteries prepared according to Example 4 and Comparative Example 4.

## BEST MODE FOR CARRYING OUT THE INVENTION

In the present invention, the term "crystalline" refers to a monocrystal particle unit having a regular atom arrangement. The size of the crystalline is measured by analyzing, in the Rietveld refinement method, XRD data obtained by subjecting positive electrode active material powder to X-ray diffraction analysis. Here, a sample is put into the groove of a general powder holder by using Bruker D8 Endeavor (Cu-K$\alpha$, $\lambda$=1.54Å) equipped with LynxEye XE-T-position sensitive detector, the surface of the sample is made even by using a slide glass, and the sample is filled such that the height of the sample corresponds to the edge of the holder, and then the X-ray diffraction analysis is measured under the conditions of step size=0.02° with respect to the region of FDS 0.5°, 2$\theta$=15° to 90°, and total scan time=about 20 minutes. The Rietveld refinement is performed with respect to the measured data in consideration of the charges (metals having +3 at a transition metal site and Ni having +2 at a Li site) at each site and cation mixing. Specifically, in the analysis of the crystalline size, instrumental broadening is considered by using Fundamental Parameter Approach (FPA) embedded in Bruker TOPAS program, total peaks in a measurement range is used during the fitting. A peak shape is fitted by using only Lorenzian contribution as a first principle (FP) among usable peak types at TOPAS, and no strain is considered.

In the present invention, the term "primary particle" refers to a minimum particle unit distinguished as a single lump when the cross-section of the positive electrode active material is observed through a scanning electron microscope (SEM), and may be composed of a single crystalline or a plurality of crystallines. In the present invention, the average particle diameter of the primary particles may be determined by a method of measuring each particle size distinguished from a cross-sectional SEM image of the positive electrode active material particles and calculating an arithmetic mean value thereof.

In the present invention, the term "secondary particle" refers to a secondary structure formed by agglomerating a plurality of primary particles. The average particle diameter of the secondary particles may be measured by using a particle size analyzer, and in the present invention, s3500 manufactured by Microtrac is used as a particle size analyzer.

In the present invention, the term "particle diameter Dn" of the positive electrode active material refers to a particle diameter at n% of a volume cumulative distribution according to the particle diameter. That is, D50 is a particle diameter at 50% of the volume cumulative distribution according to the particle diameter, D90 is a particle diameter at 90% of the volume cumulative distribution according to the particle diameter, and D10 is a particle diameter at 10% of the volume cumulative distribution according to the particle diameter. The Dn is measured by using a laser diffraction method. Specifically, after dispersing measurement target powder in a dispersion medium (distilled water), the dispersion medium is introduced into a commercially available laser diffraction particle size measurement instrument (e.g., Microtrac S3500) and a particle size distribution is calculated by measuring a difference in diffraction patterns due to a particle size when particles pass through a laser beam. The D10, D50, and D90 may be measured by calculating particle diameters at 10%, 50%, and 90% of the volume cumulative distribution according to the particle diameter in the measurement instrument.

In the present specification, the term "specific surface area" is measured by a Brunauer-Emmett-Teller (BET) method, and particularly, the specific surface area may be calculated from a nitrogen gas adsorption amount at a liquid nitrogen temperature (77K) using BELSORP-mino II manufactured by Bell Japan Inc.

Hereinafter, the present invention will be described in detail.

The present inventors have made research to improve resistance characteristics of the lithium secondary battery to which the high-Ni positive electrode active material is applied. As a result, the present inventors have found that the resistance characteristics of the high-capacity positive electrode may be improved by applying the single-walled carbon nanotubes together with the high-Ni positive electrode active material having a particular size of crystallines, and then completed the present invention.

## Positive Electrode

A positive electrode according to the present invention includes a positive electrode active material layer including (1) a positive electrode active material, (2) a conductive agent, and (3) a binder. In this case, the positive electrode active material include a first positive electrode active material represented by Formula 1 below and having a crystalline size of 150 nm or more, and the conductive agent includes single-walled carbon nanotubes (SWCNTs).

$$[\text{Formula 1}] \qquad \text{Li}_{x1}[\text{Ni}_{a1}\text{Co}_{b1}\text{M}^1_{c1}\text{M}^2_{d1}]\text{O}_2$$

In Formula 1 above,

$M^1$ is Mn, Al, or a combination thereof,
$M^2$ is at least one selected from the group consisting of Zr, B, W, Mg, Ce, Hf, Ta, La, Ti, Sr, Ba, F, P, and S, and
$0.9 \leq x1 \leq 1.1$, $0.8 \leq a1 < 1$, $0 < b1 < 0.2$, $0 < c1 < 0.2$, and $0 \leq d1 \leq 0.1$.

Hereinafter, each component of the positive electrode according to the present invention will be described in detail.

## (1) Positive Electrode Active Material

The positive electrode according to the present invention includes, as a first positive electrode active material, a lithium composite transition metal oxide represented by [Formula 1] below.

$$[\text{Formula 1}] \qquad \text{Li}_{x1}\text{Ni}_{a1}\text{CO}_{b1}\text{M}^1_{c1}\text{M}^2_{d1}\text{O}_2$$

In Formula 1 above, $M^1$ above may be Mn, Al, or a combination thereof, and preferably, Mn or a combination of Mn

and Al.

$M^2$ may be at least one selected from the group consisting of Zr, B, W, Mg, Ce, Hf, Ta, La, Ti, Sr, Ba, F, P, and S, and more preferably includes Zr in terms of the improvement of structural stability of the lithium composite transition metal oxide.

x1 above represents a molar ratio of the lithium in the lithium composite transition metal oxide, wherein x1 may satisfy $0.9 \leq x1 \leq 1.1$, preferably $0.95 \leq x1 \leq 1.08$, and more preferably $1 \leq x1 \leq 1.08$.

a1 above represents an atom ratio of the nickel among the metals other than the lithium in the lithium composite transition metal oxide, wherein a1 may satisfy $0.80 \leq a1 \leq 1$, $0.80 \leq a1 \leq 0.99$, or $0.85 \leq x1 \leq 0.95$. When the nickel content satisfies the above range, high capacity characteristics may be achieved.

b1 above represents an atom ratio of the cobalt among the metals other than the lithium in the lithium composite transition metal oxide, wherein b1 may satisfy $0 < b1 < 0.2$, $0 < b1 \leq 0.15$, or $0.01 \leq b1 \leq 0.10$.

c1 above represents an atom ratio of $M^1$ among the metals other than the lithium in the lithium composite transition metal oxide, wherein c1 may satisfy $0 < c1 < 0.2$, $0 < c1 \leq 0.15$, or $0.01 \leq c1 \leq 0.10$.

d1 above represents an atom ratio of $M^2$ among the metals other than the lithium in the lithium composite transition metal oxide, wherein d1 may satisfy $0 \leq d1 \leq 0.1$ or $0 \leq d1 \leq 0.05$.

Meanwhile, the first positive electrode active material has a crystalline size of 150 nm or more, preferably, 150 nm to 200 nm, and more preferably, 160 nm to 190 nm. When the high-Ni positive electrode active material having a crystalline size of less than 150 nm is used, the initial resistance is high and the charge and discharge capacity is not sufficient, and thus it is difficult to achieve high capacity and high output characteristics.

Meanwhile, the first positive electrode active material may have an average particle diameter D50 of 10 $\mu$m to 20 $\mu$m, preferably 10 $\mu$m to 18 $\mu$m, and more preferably 10 $\mu$m to 16 $\mu$m. When the average particle diameter of the first positive electrode active material satisfies the above range, excellent life characteristics may be achieved.

Meanwhile, the positive electrode according to the present invention may further include, as a positive electrode active material, a second positive electrode active material besides the first positive electrode active material. The second positive electrode active material may be a positive electrode active material having a different average particle diameter from the first positive electrode active material.

When at least two kinds of positive electrode active materials having different average particle diameters are used, the positive electrode active materials having a relatively small particle diameter are filled between the positive electrode active materials having a relatively large particle diameter, and accordingly, an effect of improving the energy density is achieved, and the active materials may be prevented from being broken by a nip pressure during a rolling process.

Meanwhile, the second positive electrode active material may have an average particle diameter D50 of 1 $\mu$m to 8 $\mu$m, preferably 1 $\mu$m to 7 $\mu$m, and more preferably 2 $\mu$m to 7 $\mu$m. When the average particle diameter D50 of the second positive electrode active material satisfies the above range, the electrode filling degree increases to obtain effects of improving the energy density and output characteristics.

Meanwhile, the composition of the second positive electrode active material may be the same as or different from the first positive electrode active material. For example, in the present invention, the nickel content of the first positive electrode active material may be higher than that of the second positive electrode active material. When the nickel content of the first positive electrode active material having a large particle diameter is higher than that of the second positive electrode active material having a small particle diameter, the capacity characteristics may be superior.

Specifically, the second positive electrode active material may include a lithium composite transition metal oxide represented by Formula 2 below:

$$[\text{Formula 2}] \qquad Li_{x2}Ni_{a2}Co_{b2}M^3{}_{c2}M^4{}_{d2}O_2$$

In Formula 2 above, $M^3$ above may be Mn, Al, or a combination thereof, and preferably, Mn or a combination of Mn and Al.

$M^4$ may be at least one selected from the group consisting of Zr, B, W, Mg, Ce, Hf, Ta, La, Ti, Sr, Ba, F, P, and S, and more preferably includes Zr in terms of the improvement of structural stability of the lithium composite transition metal oxide.

x2 above represents a molar ratio of the lithium in the lithium composite transition metal oxide, wherein x2 may satisfy $0.9 \leq x2 \leq 1.1$, preferably $0.95 \leq x2 \leq 1.08$, and more preferably $1 \leq x2 \leq 1.08$.

a2 above represents an atom ratio of the nickel among the metals other than the lithium in the lithium composite transition metal oxide, wherein a2 may satisfy $0.60 \leq a2 \leq 0.90$, $0.65 \leq a2 \leq 0.85$, or $0.80 \leq a2 \leq 0.85$. When the nickel content satisfies the above range, high capacity characteristics may be achieved.

b2 above represents a molar ratio of the cobalt among the metals other than the lithium in the lithium composite transition metal oxide, wherein b2 may satisfy $0 < b2 < 0.40$, $0 < b2 \leq 0.35$, or $0.01 \leq b2 \leq 0.20$.

c2 above represents a molar ratio of $M^3$ among the metals other than the lithium in the lithium composite transition metal oxide, wherein c2 may satisfy 0<c2<0.40, 0<c2≤0.35, or 0.01≤c2≤0.20.

d2 above represents a molar ratio of $M^4$ among the metals other than the lithium in the lithium composite transition metal oxide, wherein d2 may satisfy 0≤d2≤0.1 or 0≤d2≤0.05.

Meanwhile, the second positive electrode active material has a crystalline size of 90 nm to 160 nm, preferably 100 nm to 160 nm, and more preferably, 100 nm to 150 nm. When the positive electrode active material having a crystalline size satisfying the above range is used as a second positive electrode active material, a particle breakage phenomenon of the positive electrode active material during a rolling process may be effectively suppressed. When the crystalline size of the second positive electrode active material is too large or too small, it is hard to control the particle breakage.

Meanwhile, the positive electrode according to the present invention may include the first positive electrode active material and the second positive electrode active material in a weight ratio of 50:50 to 95:5, preferably 60:40 to 90:10, and more preferably 70:30 to 90:10. When the mixing ratio of the first positive electrode active material and the second positive electrode active material satisfies the above range, the filling density of the positive electrode active materials may be increased, thereby having an excellent effect of increasing battery capacity.

Meanwhile, the positive electrode active material may be included in an amount of 70 wt% to 99 wt%, preferably 80 wt% to 99 wt%, and more preferably 90 wt% to 99 wt% based on to a total weight of the positive electrode active material layer. When the content of the positive electrode active material satisfies the above range, a positive electrode having a low electrode resistance and a high energy density may be manufactured.

In this case, the content of the positive electrode active material is the sum weight of the first positive electrode active material and the second positive electrode active material.

## (2) Conductive Agent

The positive electrode of the present invention includes single-walled carbon nanotubes as a conductive agent. The single-walled carbon nanotubes is to improve conductivity of the positive electrode by providing a conductive path between the positive electrode active material and the positive electrode active material.

Since the single-walled carbon nanotubes have a higher specific surface area than other conductive agents and can form a three-dimensional conductive path, when the single-walled carbon nanotubes are applied together with the high-Ni positive electrode active material, loss of conductive path due to expansion and contraction of the positive electrode active material during charge and discharge may be minimized.

The single-walled carbon nanotubes may have a BET specific surface area of 700 $m^2$/g to 1,500 $m^2$/g, preferably 800 $m^2$/g to 1,400 $m^2$/g, and more preferably 900 $m^2$/g to 1,300 $m^2$/g. In addition, the single-walled carbon nanotubes may have an average diameter of 0.5 nm to 3 nm, and preferably 0.7 nm to 2 nm. When the specific surface area and the average diameter of the single-walled carbon nanotubes satisfy the above range, the dispersion is excellent, and thus a uniform conductive path may be formed in the positive electrode active material layer.

Meanwhile, the single-walled carbon nanotubes may be included in an amount of 0.01 wt% to 2 wt%, preferably 0.05 wt% to 1.5 wt%, and more preferably 0.1 wt% to 1.2 wt% based on the total weight of the positive electrode active material layer. When the content of the single-walled carbon nanotubes in the positive electrode active material layer satisfies the above range, a sufficient conductive path may be formed.

Meanwhile, the positive electrode of the present invention may further include, as a conductive agent, a different type of conductive agent together with the single-walled carbon nanotubes as necessary. For example, the conductive agent may further include at least one selected from the group consisting of graphite such as natural graphite or artificial graphite; carbon black such as acetylene black, Ketjen black, channel black, furnace black, lamp black or thermal black; a conductive fiber such as a carbon fiber or a metal fiber; metal powder such as aluminum or nickel powder; a conductive whisker such as a zinc oxide whisker or a potassium titanate whisker; and a conductive metal oxide such as a titanium oxide, and preferably carbon black. When the conductive agent besides the single-walled carbon nanotubes is further included as above, the conductivity improvement effect is more excellent.

Meanwhile, when the conductive agent besides the single-walled carbon nanotubes is further included, the conductive agent besides the single-walled carbon nanotubes may be included in an amount of 0.1 wt% to 10 wt%, preferably 0.1 wt% to 5 wt%, and more preferably 0.5 wt% to 5 wt% based on the total weight of the positive active material layer. When the content of the conductive agent besides the single-walled carbon nanotubes satisfies the above range, a decrease in capacity due to a decrease in the content of the active materials may be minimized and conductivity may be improved.

## (3) Binder

The positive electrode of the present invention includes a binder. The binder is to improve adherence between the positive electrode active materials and adhesion between the positive electrode active material and a current collector, and a binder generally known in the art may be used.

For example, a polyvinylidene fluoride (PVDF), a polyvinylidene fluoride-hexafluoropropylene copolymer (PVDF-co-HFP), a polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one alone thereof or a mixture of two or more thereof may be used as the binder.

Meanwhile, the binder may be included in an amount of 0.1 wt% to 10 wt%, preferably 0.15 wt% to 7 wt%, and more preferably 0.2 wt% to 5 wt% based on the total weight of the positive electrode active material layer. When the content of the binder satisfies the above range, the deintercalation of the positive electrode active material may be suppressed while minimizing an increase in resistance.

The positive electrode according to the present invention may be prepared by a method for mixing the positive electrode active material, the conductive agent, and the binder in a solvent to prepare a positive electrode slurry composition, coating the positive electrode slurry composition on a positive electrode current collector or a separate support, and then drying and rolling the coated positive electrode current collector or the coated support to form a positive electrode active material layer.

In this case, general solvents used in the art for preparing a positive slurry composition may be used as the solvent, and for example, N-methylpyrrolidone (NMP), dimethyl sulfoxide (DMSO), isopropyl alcohol, acetone or water may be used alone or in combination of two or more. An amount of the solvent used may be sufficient if the solvent may dissolve or disperse the positive electrode active material, the conductive agent, and the binder in consideration of the coating thickness of the slurry and preparation yield, and may allow to have a viscosity that may exhibit excellent thickness uniformity during the subsequent coating for preparing a positive electrode.

The positive electrode current collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 $\mu$m to 500um, and microscopic irregularities may be formed on the surface of the current collector to improve the adhesion of the positive electrode active material. For example, the positive electrode current collector may be used in various forms such as a film, a sheet, a foil, a net, a porous body, a foam, and a non-woven body.

## Lithium Secondary Battery

Next, a lithium secondary battery according to the present invention will be described.

The lithium secondary battery may include the above-described positive electrode according to the present invention, and particularly, the positive electrode, a negative electrode positioned to face the positive electrode, a separator interposed between the positive electrode and the negative electrode, and an electrolyte.

Furthermore, the lithium secondary battery may further selectively include a battery container accommodating an electrode assembly of the positive electrode, the negative electrode, and the separator, and a sealing member sealing the battery container.

Since the positive electrode is the same as described above, detailed descriptions thereof will be omitted, and the remaining configurations will be only described in detail below.

In the lithium secondary battery, the negative electrode includes a negative electrode current collector and a negative electrode active material layer positioned on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy, etc. may be used. Also, the negative electrode current collector may typically have a thickness of 3 $\mu$m to 500 $\mu$m, and as in the case of the positive electrode current collector, microscopic irregularities may be formed on the surface of the negative electrode current collector to enhance the adhesion of a negative electrode active material. For example, the negative electrode current collector may be used in various forms such as a film, a sheet, a foil, a net, a porous body, a foam, and a non-woven body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be undoped and doped with lithium such as $SiO_\beta(0<\beta<2)$, $SnO_2$, vanadium oxide, and lithium vanadium oxide; or a composite including the metallic material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component for assisting in bonding between a conductive material, an active material, and a current collector, and is typically added in an amount of 0.1 wt% to 10 wt% based on the total weight of the negative electrode active material layer. Examples of the binder may include a polyvinylidene fluoride (PVDF), a polyvinyl alcohol, carboxymethylcellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent is a component for further improving conductivity of the negative electrode active material, and may be added in an amount of 10 wt% or less, and preferably, 5 wt% or less based on the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

For example, the negative electrode active material layer may be prepared by coating a negative electrode slurry composition, which is prepared by dissolving or dispersing optionally the binder and the conductive agent as well as the negative electrode active material in a solvent, on the negative electrode current collector and drying the coated negative electrode current collector, or may be prepared by casting the negative electrode slurry composition on a separate support and then laminating a film separated from the support on the negative electrode current collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared using a polyolefin-based polymer, such as an ethylene homopolymer, a propylene homopolymer, an ethylene/butene copolymer, an ethylene/hexene copolymer, or an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and may be optionally used in a single-layered or multi-layered structure.

In addition, an electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the manufacture of the lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), ethylmethyl carbonate (EMC), ethylene carbonate (EC), or propylene carbonate (PC); an alcohol-based solvent such as ethyl alcohol or isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used.

Any compound may be used as the lithium salt without particular limitation as long as it may provide lithium ions used in a lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used as the lithium salt. The lithium salt may be used in a concentration range of 0.1 M to 2.0 M. When the concentration of the lithium salt is in the above range, the electrolyte may have suitable conductivity and viscosity, thereby exhibiting excellent performance, and lithium ions may effectively move.

The lithium secondary battery including the positive electrode active material according to the present invention as describe above stably exhibits excellent discharge capacity, output characteristics, and life characteristics, and thus, are useful for the field such as a portable device such as a mobile phone, a notebook computer, or a digital camera, or an electric vehicle such as a hybrid electric vehicle (HEV).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## MODE FOR CARRYING OUT THE INVENTION

Hereinafter, the present invention will be described in more detail with reference to specific examples.

**Example 1**

$Li[Ni_{0.9}Co_{0.09}Mn_{0.05}]O_2$ having a crystalline size of 180 nm and an average particle diameter D50 of 14 $\mu$m, single-walled carbon nanotubes (OSCiAl, TUBALL, BET specific surface area=1160m$^2$/g), carbon black, and a PVDF binder were mixed at a weight ratio of 96:0.5:1:2.5 in N-methyl pyrrolidone to prepare a positive electrode slurry composition. The positive electrode slurry composition was coated on one surface of an aluminum current collector, dried at 130 °C, and then rolled to prepare a positive electrode.

In addition, artificial graphite, carbon black (SUPER C-65), and an acrylic binder (BM-L302 available from Zeon Corporation) were mixed at a weight ratio of 95:1:4 and added in water, which is a solvent, to prepare a negative electrode slurry composition. The negative electrode slurry composition was coated on a copper current collector, dried, and then rolled to prepare a negative electrode.

A lithium secondary battery was prepared by preparing an electrode assembly by disposing a polyethylene separator between the above-prepared positive electrode and negative electrode, disposing the electrode assembly in a battery case, and then injecting an electrolyte solution into the case.

In this case, as the above electrolyte solution, an electrolyte solution, in which $LiPF_6$ was dissolved in 1 M in a mixed organic solvent of ethylene carbonate (EC): ethyl methyl carbonate (EMC): diethyl carbonate (DEC) at a volume ratio of 3:4:3, was used.

**Example 2**

A positive electrode and a lithium secondary battery were prepared in the same manner as in Example 1 except for using, as a positive electrode active material, $Li[Ni_{0.9}Co_{0.05}Mn_{0.05}]O_2$ having a crystalline size of 156 nm and an average particle diameter D50 of 14 $\mu$m.

**Example 3**

A positive electrode and a lithium secondary battery were prepared in the same manner as in Example 1 except for using, as a positive electrode active material, a mixture of $Li[Ni_{0.9}Co_{0.05}Mn_{0.05}]O_2$ having a crystalline size of 180 nm and an average particle diameter D50 of 14 $\mu$m and $Li[Ni_{0.9}Co_{0.1}Mn_{0.1}]O_2$ having a crystalline size of 139 nm and an average particle diameter D50 of 14 $\mu$m at a weight ratio of 75:25.

**Example 4**

A positive electrode and a lithium secondary battery were prepared in the same manner as in Example 1 except for using, as a positive electrode active material, $Li[Ni_{0.8}Co_{0.1}Mn_{0.1}]O_2$ having a crystalline size of 159 nm and an average particle diameter D50 of 14 $\mu$m.

**Comparative Example 1**

A positive electrode and a lithium secondary battery were prepared in the same manner as in Example 1 except for not using single-walled carbon nanotubes.

**Comparative Example 2**

A positive electrode and a lithium secondary battery were prepared in the same manner as in Example 1 except for using, as a positive electrode active material, $Li[Ni_{0.9}Co_{0.05}Mn_{0.05}]O_2$ having a crystalline size of 124 nm and an average particle diameter D50 of 14 $\mu$m.

**Comparative Example 3**

A positive electrode and a lithium secondary battery were prepared in the same manner as in Comparative Example 2 except for not using single-walled carbon nanotubes.

**Comparative Example 4**

A positive electrode and a lithium secondary battery were prepared in the same manner as in Example 4 except for not using single-walled carbon nanotubes.

**Experimental Example 1** - **Evaluation of Resistance Characteristics**

Resistance versus SOC was measured by a hybrid pulse power characterization (HPPC) test while charging the lithium secondary batteries prepared according to Examples 1-4 and Comparative Examples 1-4 above. Specifically, the lithium secondary batteries prepared according to Examples 1-4 and Comparative Examples 1-4 above were charged at room temperature (25 °C) in a CCCV mode at a C-rate of 0.3 C until 4.2 V, and then discharged to 2.5 V. Then, while the lithium secondary batteries were charged in a CCCV mode at a C-rate of 0.3 C until 4.2 V and then discharged, when discharged at a C-rate of 2C, 60 second voltage drop resistance was measured for each SOC.

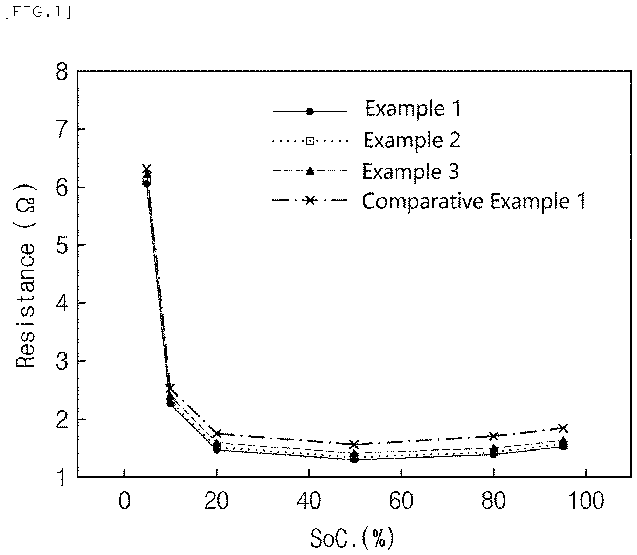

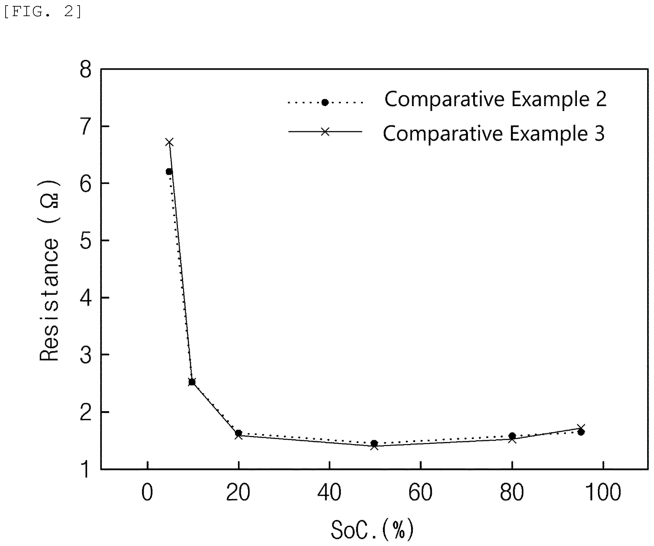

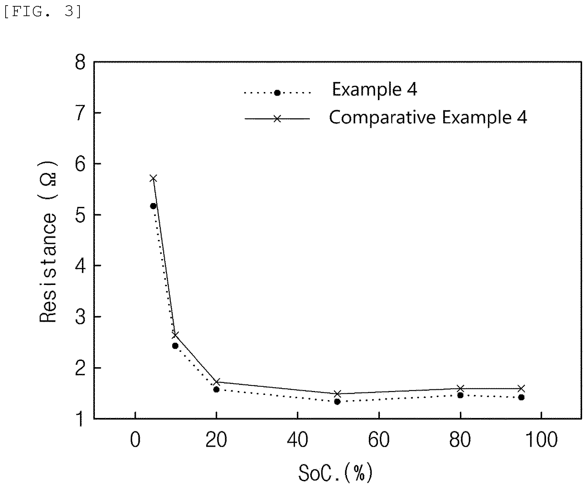

Measurement results are presented in FIGS. 1 to 3. FIG. 1 is a graph showing resistance characteristics versus SOC of lithium secondary batteries prepared according to Comparative Example 1 and Examples 1 to 3, and FIG. 2 is a graph showing resistance characteristics versus SOC of lithium secondary batteries prepared according to Comparative Examples 2 and 3. FIG. 3 is a graph showing resistance characteristics versus SOC of lithium secondary batteries prepared according to Example 4 and Comparative Example 4.

Referring to FIG. 1, it may be confirmed that the lithium secondary battery of Examples 1 to 3 exhibit lower resistance in the entire range of SOC than the lithium secondary battery of Comparative Example 1.

In addition, referring to FIG. 2, it may be confirmed that Comparative Example 3 using the positive electrode active material having a small crystalline size of less than 150 nm without using the single-walled carbon nanotubes has a significant increase in initial resistance compared with Comparative Example 1. Meanwhile, it may be confirmed that Comparative Example 2 having a small crystalline size of less than 150 nm and using the single-walled carbon nanotubes has a decrease in initial resistance compared with Comparative Example 3, but has a slight effect of reducing the initial resistance compared with Comparative Example 1 using the positive electrode active material having a grain size of 180 nm, and exhibits resistance characteristics equivalent to Comparative Example 3 by increasing resistance as SOC becomes high due to charging.

Meanwhile, referring to FIG. 3, it may be confirmed that the lithium secondary battery of Example 4 exhibits lower resistance in the entire range of SOC than the lithium secondary battery of Comparative Example 4 to which the positive electrode active material having the same composition and crystalline size as Example 4.

**Experimental Example 2 - Evaluation of Life Characteristics**

Each of the lithium secondary batteries manufactured according to Examples 1 to 4 and Comparative Examples 1 and 4 was measured for a capacity retention rate and a resistance increase rate while being charged and discharged 100 cycles under the conditions of 45 °C, 0.33C, and a range of 2.5 V to 4.2 V.

For the capacity retention rate, a capacity fraction of each cycle was measured on the basis of the second discharge capacity, and for the resistance increase rate, the resistance was measured as a voltage drop during the initial 60 seconds of discharge, and an increase rate was measured on the basis of the resistance after the second discharge.

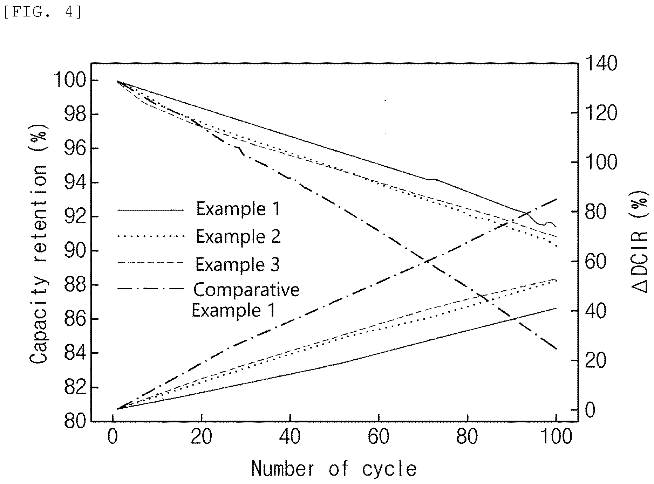

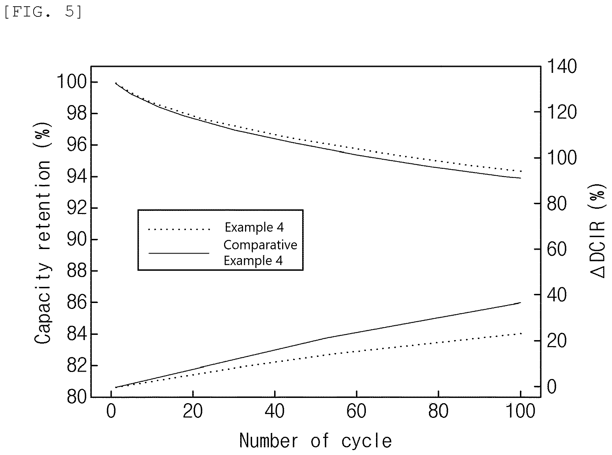

Measurement results are presented in FIGS. 4 and 5. FIG. 4 is a graph showing life characteristics of lithium secondary batteries prepared according to Comparative Example 1 and Examples 1 to 3, and FIG. 5 is a graph showing life characteristics lithium secondary batteries prepared according to Example 4 and Comparative Example 4.

Referring to FIG. 4, it may be confirmed that the lithium secondary batteries of Examples 1 to 3 exhibit significantly excellent life characteristics compared with the lithium secondary battery of Comparative Example 1. In addition, referring to FIG. 5, it may be confirmed that the lithium secondary battery of Example 4 exhibits significantly excellent life characteristics, and particularly resistance characteristics compared with the lithium secondary battery of Comparative Example 4.

**Claims**

1. A positive electrode for a lithium secondary battery comprising a positive electrode active material layer including:

   a first positive electrode active material represented by Formula 1 below and having a crystalline size of 150 nm or more, wherein crystalline size is determined by X-ray diffraction analysis as set out in the description;
   a conductive agent including single-walled carbon nanotubes; and
   a binder:

   $$[\text{Formula 1}] \qquad \text{Li}_{x1}[\text{Ni}_{a1}\text{Co}_{b1}\text{M}^1{}_{c1}\text{M}^2{}_{d1}]\text{O}_2$$

   wherein, in Formula 1 above,

   $M^1$ is Mn, Al, or a combination thereof,
   $M^2$ is at least one selected from the group consisting of Zr, B, W, Mg, Ce, Hf, Ta, La, Ti, Sr, Ba, F, P, and S, and
   $0.9 \leq x1 \leq 1.1$, $0.8 \leq a1 < 1$, $0 < b1 < 0.2$, $0 < c1 < 0.2$, $0 \leq d1 \leq 0.1$.

2. The positive electrode for a lithium secondary battery of claim 1, wherein the first positive electrode active material has a crystalline size of 150 nm to 200 nm.

3. The positive electrode for a lithium secondary battery of claim 1, wherein the first positive electrode active material has an average particle diameter $D_{50}$ of 10 $\mu$m to 20 $\mu$m, wherein $D_{50}$ is determined by laser diffraction as set out in the description.

4. The positive electrode for a lithium secondary battery of claim 1, wherein the positive electrode active material layer further includes a second positive electrode active material having an average particle diameter $D_{50}$ of 1 $\mu$m to 8 $\mu$m, wherein $D_{50}$ is determined by laser diffraction as set out in the description.

5. The positive electrode for a lithium secondary battery of claim 4, wherein the second positive electrode active material is represented by Formula 2 below and has a crystalline size of 90 nm to 160 nm:

   $$[\text{Formula 2}] \qquad \text{Li}_{x2}[\text{Ni}_{a2}\text{Co}_{b2}\text{M}^3{}_{c2}\text{M}^4{}_{d2}]\text{O}_2$$

   wherein, in Formula 2 above,

   $M^3$ is Mn, Al, or a combination thereof,
   $M^4$ is at least one selected from the group consisting of Zr, B, W, Mg, Ce, Hf, Ta, La, Ti, Sr, Ba, F, P, and S, and
   $0.9 \leq x2 \leq 1.1$, $0.6 \leq a2 \leq 0.90$, $0 < b2 < 0.40$, $0 < c2 < 0.40$, and $0 \leq d2 \leq 0.1$.

6. The positive electrode for a lithium secondary battery of claim 4, wherein the first positive electrode active material and the second positive electrode active material are included at a weight ratio of 50:50 to 95:5.

7. The positive electrode for a lithium secondary battery of claim 1, wherein the single-walled carbon nanotubes have a specific surface area of 700 $m^2$/g to 1,500 $m^2$/g, wherein specific surface area is determined by a Brunauer-Emmett-Teller method as set out in the description.

8. The positive electrode for a lithium secondary battery of claim 1, wherein the conductive agent further includes at least one selected from the group consisting of graphite, carbon black, a conductive fiber, metal powder, a conductive whisker, and a conductive metal oxide.

9. The positive electrode for a lithium secondary battery of claim 1, wherein the single-walled carbon nanotubes are included in an amount of 0.01 wt% to 2 wt% based on a total weight of the positive electrode active material layer.

10. A lithium secondary battery comprising the positive electrode for a lithium secondary battery of any one of claim 1 to claim 9.

**Patentansprüche**

1. Positive Elektrode für eine Lithiumsekundärbatterie, umfassend eine Positivelektroden-Aktivmaterialschicht, die umfasst:

ein erstes Positivelektroden-Aktivmaterial, dargestellt durch die nachstehende Formel 1 und aufweisend eine kristalline Größe von 150 nm oder mehr, worin die kristalline Größe durch wie in der Beschreibung beschriebene Röntgenbeugungsanalyse bestimmt wird;
ein leitfähiges Mittel, umfassend einwandige Kohlenstoffnanoröhrchen; und
ein Bindemittel:

$$[\text{Formel 1}] \qquad Li_{x1}[Ni_{a1}CO_{b1}M^1_{c1}M^2_{d1}]O_2$$

worin in der vorstehenden Formel 1

$M^1$ Mn, Al oder eine Kombination hiervon ist,
$M^2$ zumindest eines ist, das ausgewählt ist aus der Gruppe bestehend aus Zr, B, W, Mg, Ce, Hf, Ta, La, Ti, Sr, Ba, F, P und S, und
$0{,}9 \leq x1 \leq 1{,}1$, $0{,}8 \leq a1 < 1$, $0 < b1 < 0{,}2$, $0 < c1 < 0{,}2$, $0 \leq d1 \leq 0{,}1$.

2. Positive Elektrode für eine Lithiumsekundärbatterie gemäß Anspruch 1, worin das erste Positivelektroden-Aktivmaterial eine kristalline Größe von 150 nm bis 200 nm aufweist.

3. Positive Elektrode für eine Lithiumsekundärbatterie gemäß Anspruch 1, worin das erste Positivelektroden-Aktivmaterial einen mittleren Partikeldurchmesser $D_{50}$ von 10 μm bis 20 μm aufweist, worin $D_{50}$ durch wie in der Beschreibung beschriebene Laserbeugung bestimmt wird.

4. Positive Elektrode für eine Lithiumsekundärbatterie gemäß Anspruch 1, worin die Positivelektroden-Aktivmaterialschicht ferner ein zweites Positivelektroden-Aktivmaterial mit einem mittleren Partikeldurchmesser $D_{50}$ von 1 μm bis 8 μm umfasst, worin $D_{50}$ durch wie in der Beschreibung beschriebene Laserbeugung bestimmt wird.

5. Positive Elektrode für eine Lithiumsekundärbatterie gemäß Anspruch 4, worin das zweite Positivelektroden-Aktivmaterial durch die nachstehende Formel 2 dargestellt ist und eine kristalline Größe von 90 nm bis 160 nm aufweist:

$$[\text{Formel 2}] \qquad Li_{x2}[Ni_{a2}CO_{b2}M^3_{c2}M^4_{d2}]O_2$$

worin in der vorstehenden Formel 2

$M^3$ Mn, Al oder eine Kombination hiervon ist,
$M^4$ mindestens eines ist, das ausgewählt ist aus der Gruppe bestehend aus Zr, B, W, Mg, Ce, Hf, Ta, La, Ti, Sr, Ba, F, P und S, und
$0{,}9 \leq x2 \leq 1{,}1$, $0{,}6 \leq a2 \leq 0{,}90$, $0 < b2 < 0{,}40$, $0 < c2 < 0{,}40$ und $0 \leq d2 \leq 0{,}1$.

6. Positive Elektrode für eine Lithiumsekundärbatterie gemäß Anspruch 4, worin das erste Positivelektroden-Aktivmaterial und das zweite Positivelektroden-Aktivmaterial in einem Gewichtsverhältnis von 50:50 bis 95:5 enthalten sind.

7. Positive Elektrode für eine Lithiumsekundärbatterie gemäß Anspruch 1, worin die einwandigen Kohlenstoffnanoröhrchen eine spezifische Oberfläche von 700 $m^2$/g bis 1.500 $m^2$g aufweisen, worin die spezifische Oberfläche durch ein wie in der Beschreibung angegebenes Brunauer-Emmett-Teller-Verfahren bestimmt wird.

8. Positive Elektrode für eine Lithiumsekundärbatterie gemäß Anspruch 1, worin das leitfähige Mittel ferner zumindest eines umfasst, ausgewählt aus der Gruppe bestehend aus Graphit, Ruß, einer leitfähigen Faser, Metallpulver, einem leitfähigen Whisker und einem leitfähigen Metalloxid.

**9.** Positive Elektrode für eine Lithiumsekundärbatterie gemäß Anspruch 1, worin die einwandigen Kohlenstoffnanoröhrchen in einer Menge von 0,01 Gew.-% bis 2 Gew.-% enthalten sind, bezogen auf das Gesamtgewicht der Positivelektroden-Aktivmaterialschicht.

**10.** Lithiumsekundärbatterie, umfassend die positive Elektrode für eine Lithiumsekundärbatterie gemäß irgendeinem von Anspruch 1 bis Anspruch 9.


**Revendications**

**1.** Électrode positive pour une batterie rechargeable au lithium comprenant une couche de matériau actif d'électrode positive incluant :

un premier matériau actif d'électrode positive représenté par la Formule 1 ci-dessous et présentant une taille cristalline de 150 nm ou plus, dans lequel la taille cristalline est déterminée par une analyse de diffraction par rayons X telle qu'exposée dans la description ;
un agent conducteur incluant des nanotubes de carbone à paroi unique ; et
un liant :

$$[\text{Formule 1}] \qquad Li_{x1}[Ni_{a1}Co_{b1}M^1{}_{c1}M^2{}_{d1}]O_2$$

dans lequel, dans la Formule 1 ci-dessus,

$M^1$ est Mn, Al, ou une combinaison de ceux-ci,
$M^2$ est au moins un élément sélectionné parmi le groupe consistant en Zr, B, W, Mg, Ce, Hf, Ta, La, Ti, Sr, Ba, F, P, et S, et

$$0,9 \leq x1 \leq 1,1,\ 0,8 \leq a1 < 1,\ 0 < b1 < 0,2,\ 0 < c1 < 0,2,\ 0 \leq d1 \leq 0,1.$$

**2.** Électrode positive pour une batterie rechargeable au lithium selon la revendication 1, dans laquelle le premier matériau actif d'électrode positive présente une taille cristalline de 150 nm à 200 nm.

**3.** Électrode positive pour une batterie rechargeable au lithium selon la revendication 1, dans laquelle le premier matériau actif d'électrode positive présente un diamètre de particule moyen $D_{50}$ de 10 $\mu$m à 20 $\mu$m, dans lequel $D_{50}$ est déterminé par une diffraction laser telle qu'exposée dans la description.

**4.** Électrode positive pour une batterie rechargeable au lithium selon la revendication 1, dans laquelle la couche de matériau actif d'électrode positive inclut en outre un second matériau actif d'électrode positive présentant un diamètre de particule moyen $D_{50}$ de 1 $\mu$m à 8 $\mu$m, dans lequel $D_{50}$ est déterminé par une diffraction laser telle qu'exposée dans la description.

**5.** Électrode positive pour une batterie rechargeable au lithium selon la revendication 4, dans laquelle le second matériau actif d'électrode positive est représenté par la Formule 2 ci-dessous et présente une taille cristalline de 90 nm à 160 nm :

$$[\text{Formule 2}] \qquad Li_{x2}[Ni_{a2}Co_{b2}M^3{}_{c2}M^4{}_{d2}]O_2$$

dans lequel, dans la Formule 2 ci-dessus,

$M^3$ est Mn, Al, ou une combinaison de ceux-ci,
$M^4$ est au moins un élément sélectionné parmi le groupe consistant en Zr, B, W, Mg, Ce, Hf, Ta, La, Ti, Sr, Ba, F, P, et S, et

$$0,9 \leq x2 \leq 1,1,\ 0,6 \leq a2 \leq 0,90,\ 0 < b2 < 0,40,\ 0 < c2 < 0,40,\ et\ 0 \leq d2 \leq 0,1.$$

**6.** Électrode positive pour une batterie rechargeable au lithium selon la revendication 4, dans laquelle le premier matériau actif d'électrode positive et le second matériau actif d'électrode positive sont inclus à un rapport de poids de 50:50 à 95:5.

7. Électrode positive pour une batterie rechargeable au lithium selon la revendication 1, dans laquelle les nanotubes de carbone à paroi unique présentent une aire spécifique de 700 $m^2$/g à 1500 $m^2$/g, dans laquelle une aire spécifique est déterminée par une méthode de Brunauer-Emmett-Teller telle qu'exposée dans la description.

8. Électrode positive pour une batterie rechargeable au lithium selon la revendication 1, dans laquelle l'agent conducteur inclut en outre au moins un élément sélectionné parmi le groupe consistant en du graphite, du noir de carbone, une fibre conductrice, de la poudre métallique, une trichite conductrice, et un oxyde de métal conducteur.

9. Électrode positive pour une batterie rechargeable au lithium selon la revendication 1, dans laquelle les nanotubes de carbone à paroi unique sont inclus dans une quantité de 0,01 % en poids à 2 % en poids sur la base d'un poids total de la couche de matériau actif d'électrode positive.

10. Batterie rechargeable au lithium comprenant l'électrode positive pour une batterie rechargeable au lithium selon l'une quelconque de la revendication 1 à la revendication 9.

[FIG.1]

[FIG. 2]

[FIG. 3]

[FIG. 4]

[FIG. 5]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106992318 A
- KR 20190117387 A
- US 2021020907 A1
- US 10276870 B2

**Non-patent literature cited in the description**

- **BAN et al.** have prepared and characterized a binder-free LiNi0.4Mn0.4Co0.2O2 cathode fabricated with 5 wt.% single-walled carbon nanotubes. *Advanced Energy Materials*, 2011, vol. 1 (1), 58-62